# EUROPEAN PATENT SPECIFICATION

(11) **EP 2 821 225 B1**
(45) Date of publication and mention of the grant of the patent: **11.01.2017**
(21) Application number: 13175191.9
(22) Date of filing: 04.07.2013
(51) Int. Cl.: B32B 37/10, B32B 38/06

(54) **Method for forming thermoplastic composites**
Verfahren zur Herstellung thermoplastischer Verbundwerkstoffe
Procédé pour la formation de composites thermoplastiques

(43) Date of publication of application: 07.01.2015
(73) Proprietor: Chaei Hsin Enterprise Co., Ltd., Taichung City 407 (TW)
(72) Inventor: Wang, Shui Mu, Taichung City 407 (TW)
(74) Representative: Chaillot, Geneviève

(56) References cited:
- WO-A2-2008/124449
- GB-A- 1 364 455
- GB-A- 2 256 168
- US-A- 4 740 417

## Description

### FIELD OF THE INVENTION

The present invention relates to a method for forming thermoplastic composites in which the cloth material and the thermoplastic film are combined tighter to form the thermoplastic composites with a varying shape so as to produce shoes, purses, and hats further.

### BACKGROUND OF THE INVENTION

A conventional method for forming thermoplastic composites is disclosed in TW Publication No. I269703, wherein the film layer, the thermoplastic film, and fabric are rolled by two rollers together to form three-dimensional patterns, but the three-dimensional patterns are not obvious.

Another conventional method for forming thermoplastic composites is disclosed in TW Publication No. I266693, wherein the cloth material and the thermoplastic film are hot pressed by an upper mold and a lower mold, yet concave and convex patterns on the upper mold and the lower mold are not three-dimensional obviously.

US4,740,417 disclosed that the thermoplastic film ("substrate", 60) is heated until sagging and then the sagging substrate is deposited over the cloth material ("fabric", 50). A vacuum is applied through the mold and attracts the sagging substrate into the mold. The attraction causes contact and adhesion of the heated substrate and the fabric. But it did not disclose any sort of pressure member and the adhesion is only allowed thanks to a vacuum.

WO 2008/124449 A2 disclosed the laminating of a lamination film with a porous substrate. The lamination film may include one or multiple polymer layers. The melting temperature of an outer adhesive polymer layer is less than a melting temperature of porous substrate. The outer adhesive polymer layer is brought into a relationship with a top surface of the porous substrate by means of rolls, heated by a heating unit above melting point of the adhesive polymer layer.

GB 2 256 168 A disclosed the bonding of a silicon plastics material mat to polymer impregnated material layers on a bonding surface. The rolling action of a roller helps to bring them into a contacting relationship. The mat is heated by a heater. The bonding surface comprises a network of holes communicating with a port connected to a vacuum pump.

GB 1 364 455 A disclosed the method of producing a flexible laminated sheet fabric comprising assembling together a sheet of plastic material and a textile material with an adhesive located therebetween, and applying a reduced pressure or vacuum to that side of the textile material remote from the said plastics material when the latter is in at least partially softened condition so that a suction effect is produced causing the plastics material to be drawn at least partially through the textile material, and causing the plastic material to bond mechanically with surface fibres of the said textile material.

However, above-mentioned prior arts did not teach that a method for forming thermoplastic composites involving a press mold and/or an air insulation film as a pressing member so as to obtain a better adhesion and a better penetration of the thermoplastic film material into the cloth material provided by a force uniformly applied thereto by the pressing member.

The present invention has arisen to mitigate and/or obviate the afore-described disadvantages.

### SUMMARY OF THE INVENTION

The primary objective of the present invention is to provide a method for forming thermoplastic composites in which the cloth material and the thermoplastic film are combined tighter to form the thermoplastic composites with a varying shape so as to produce shoes, purses, and hats further.

Another objective of the present invention is to provide a method for forming thermoplastic composites which involves a press mold and/or an air insulation film as a pressing member so as to obtain a better adhesion and a better penetration of the thermoplastic film material into the cloth material provided by a force uniformly applied thereto by the pressing member.

To obtain the above objectives, a method for forming thermoplastic composites according to a first embodiment of the present invention contains steps of:
(a). cutting a thermoplastic film and a cloth material, wherein the thermoplastic film is comprised of a surface layer and an adhesive layer, and a melting point of the surface layer is higher than the adhesive layer;
(b). placing the thermoplastic film on a platform of a molding machine, facing the adhesive layer upwardly, and covering the cloth material on the thermoplastic film, wherein the platform includes a plurality of channels defined therein, a plurality of concave and convex patterns arranged on a top surface thereof, and plural pores evenly formed on the top surface thereof and communicating with the plurality of channels;
(c). heating the thermoplastic film by using a heating unit so as to melt the adhesive layer and to soften the surface layer, wherein air in the plurality of channels is drawn by a vacuum unit, and a top surface of the cloth layer is pressed by a pressing member, the plural pores draws the thermoplastic film and the cloth material downwardly, and the pressing member presses the cloth material, such that the adhesive layer of the thermoplastic film penetrates into the cloth material, the adhesive layer adheres with the cloth material, the surface layer of the thermoplastic film corresponds to the plurality of concave and convex patterns of the platform, thus forming three-dimensional patterns.

To obtain the above objectives, a method for forming thermoplastic composites according to a second embodiment of the present invention contains steps of:
(a). cutting a thermoplastic film and a cloth material, wherein the thermoplastic film is comprised of a surface layer and an adhesive layer, and a melting point of the surface layer is higher than the adhesive layer;
(b). placing the cloth material on a platform of a molding machine, and then putting an adhesive layer of the thermoplastic film on the cloth material, wherein the platform includes a plurality of channels defined therein, and plural pores evenly formed on the top surface thereof and communicating with the plurality of channels;
(c). heating the thermoplastic film by using a heating unit so as to melt the adhesive layer, wherein air in the plurality of channels is drawn by a vacuum unit, and a top surface of the thermoplastic film is pressed by a pressing member, the plural pores draw the thermoplastic film and the cloth material downwardly, and the pressing member presses the thermoplastic film, such that the adhesive layer of the thermoplastic film penetrates into the cloth material;
wherein the pressing member is a press mold and/or an insulation film, and wherein a melting point of the air insulation film is higher than that of the surface layer and is covered on the platform.

### BRIEF DESCRIPTION OF THE DRAWINGS

FIG. 1 is a flow chart of a method for forming thermoplastic composites according to a first embodiment of the present invention.
FIG. 2 is an amplified cross sectional view showing a thermoplastic film of the method for forming thermoplastic composites according to the first embodiment of the present invention.
FIG. 3 is a perspective view showing the operation of the method for forming thermoplastic composites according to the first embodiment of the present invention.
FIG. 4 is a cross sectional view showing the operation of the method for forming thermoplastic composites according to the first embodiment of the present invention.
FIG. 5 is a perspective view showing a finished product formed by the method for forming thermoplastic composites according to the first embodiment of the present invention.
FIG. 6 is a flow chart of a method for forming thermoplastic composites according to a second embodiment of the present invention.
FIG. 7 is a cross sectional view showing the operation of the method for forming thermoplastic composites according to the second embodiment of the present invention.

### DETAILED DESCRIPTION OF THE PREFERRED

### EMBODIMENTS

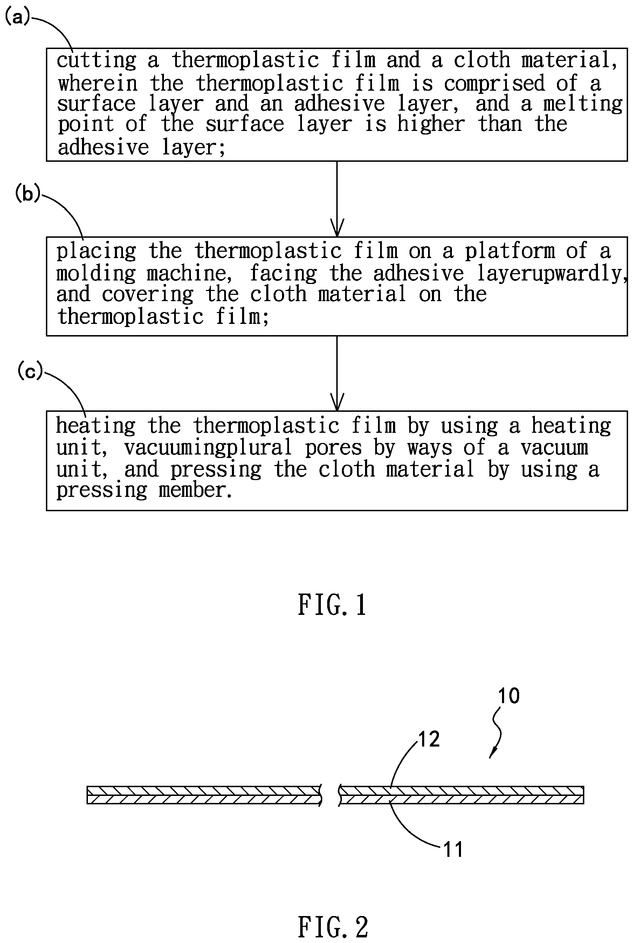

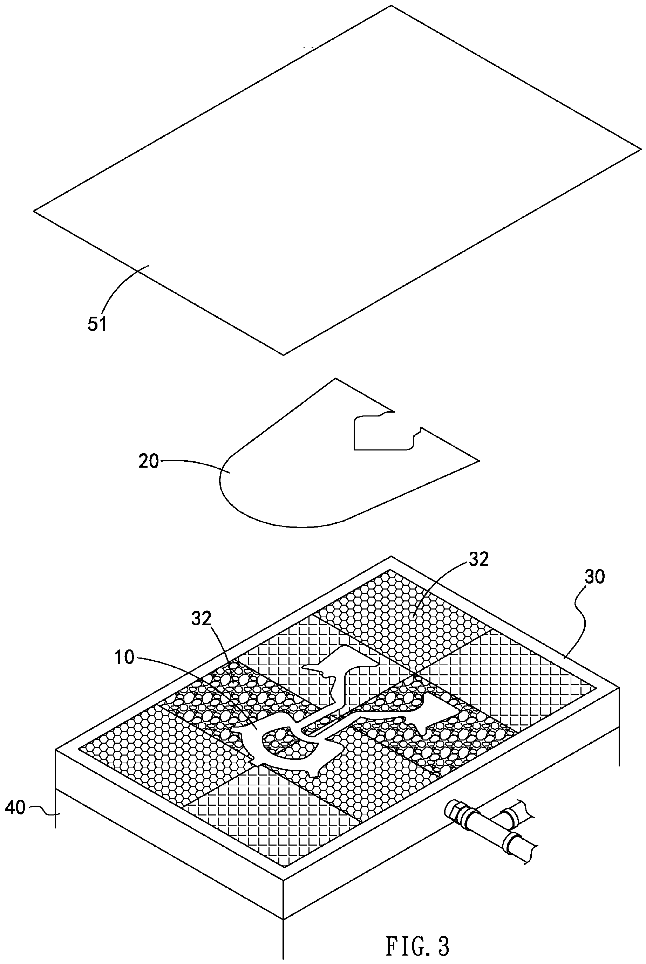

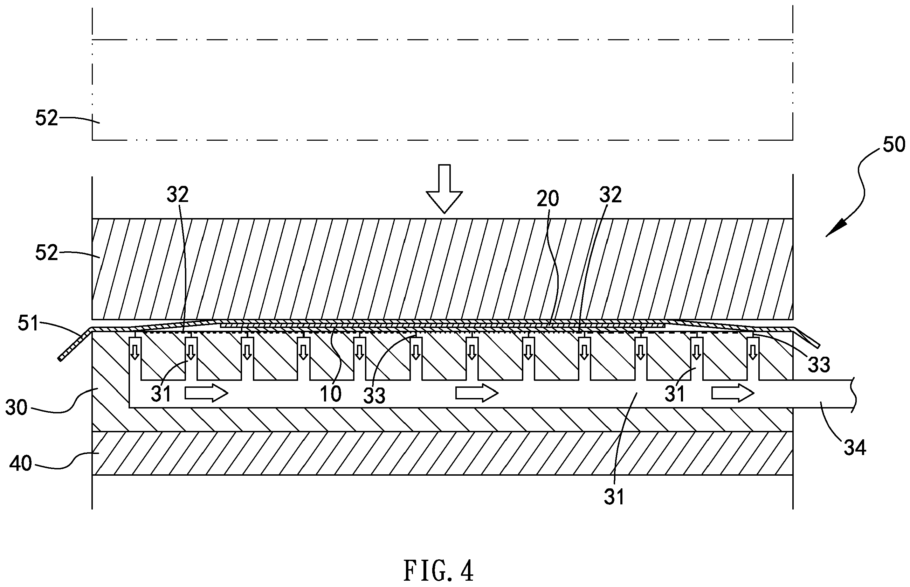

With reference to FIGS. 1-5, a method for forming thermoplastic composites according to a first embodiment of the present invention contains steps of:
(a). cutting a thermoplastic film 10 and a cloth material 20, wherein a size of the thermoplastic film 10 is less than that of the cloth material 20, and the thermoplastic film 10 is made of thermoplastic polymeric material and colorant by ways of an extruder, and the thermoplastic polymeric material is selected from TPU + SBR, TPU + SEBS, TPU + TPR, TPU + EPDM, TPU + TPU hot melt adhesives and TPU + Nylon elastomer, and wherein a color is printed, coated or surface sandwiched on the thermoplastic film 10, a thickness of the thermoplastic film 10 is 0.05 to 2.5mm, the thermoplastic film 10 is comprised of a surface layer 11 and an adhesive layer 12 (as shown in FIG. 2), wherein a melting point of the surface layer 11 is 5 °C higher than the adhesive layer 12, and the cloth material is selected from woven, knitted fabrics, non-woven and sandwich mesh;
(b). placing the thermoplastic film 10 on a platform 30 of a molding machine, facing the adhesive layer 12 upwardly, and covering the cloth material 20 on the thermoplastic film 10 (as illustrated in FIG. 3), wherein the platform 30 includes a plurality of channels 31 defined therein, a plurality of concave and convex patterns 32 arranged on a top surface thereof, and plural pores 33 evenly formed on the top surface thereof and communicating with the plurality of channels 31, wherein the concave and convex patterns 3 are the same or varying, and a diameter of each pore is 0.001mm;
(c). heating the thermoplastic film 10 by using a heating unit 40 so as to melt the adhesive layer 12 and to soften the surface layer 11, wherein air in the plurality of channels 31 is drawn by a vacuum unit 34, and a top surface of the cloth layer 20 is pressed by a pressing member 50, wherein the pressing member 50 has an air insulation film 51 and a press mold 52, a melting point of the air insulation film 51 is higher than that of the surface layer 11, and the air insulation film 51 is made of rubber or silicone, and the air insulation film 51 is covered on the platform 30 and the cloth material 20, the press mold 52 is pressed on the air insulation film 51.

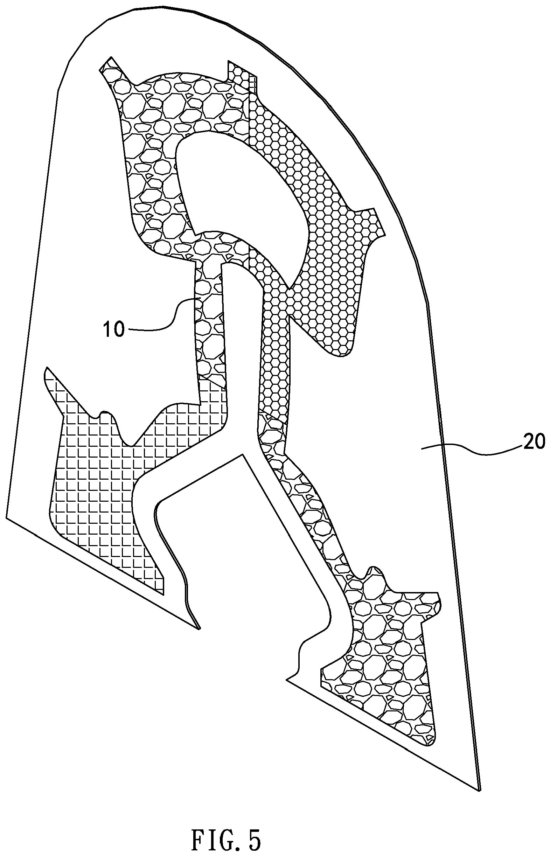

Thereby, when the vacuum unit 34 operates, a pressure between the top surface of the platform 30 and the gas insulation film 51 is lower than atmospheric pressure and is a negative pressure to draw the gas insulation film 51 downwardly so that the gas insulation film 51 presses the cloth material 20, and the press mold 52 presses the gas insulation film 51, such that the adhesive layer 12 of the thermoplastic film 10 penetrates into the cloth material 20, hence the adhesive layer 12 adheres with the cloth material 20. In addition, the plural pores 33 draw the thermoplastic film 10 and the cloth material 20 downwardly, such that the surface layer 11 of the thermoplastic film 10 corresponds to the plurality of concave and convex patterns 32 of the platform 30, thus forming three-dimensional patterns obviously (as shown in FIG. 5). Also, the cloth material 20 and the thermoplastic film 10 are combined tighter to form the thermoplastic composites with a varying shape so as to produce shoes, purses, and hats further.

It is to be noted that the pressing member 50 is comprises of the air insulation film 51 or the press mold 52. For example, when gaps of the cloth material 20 are large, the pressing member 50 is the air insulation film 51, and the heating unit 40 is fixed in the platform 30 or the press mold 52.

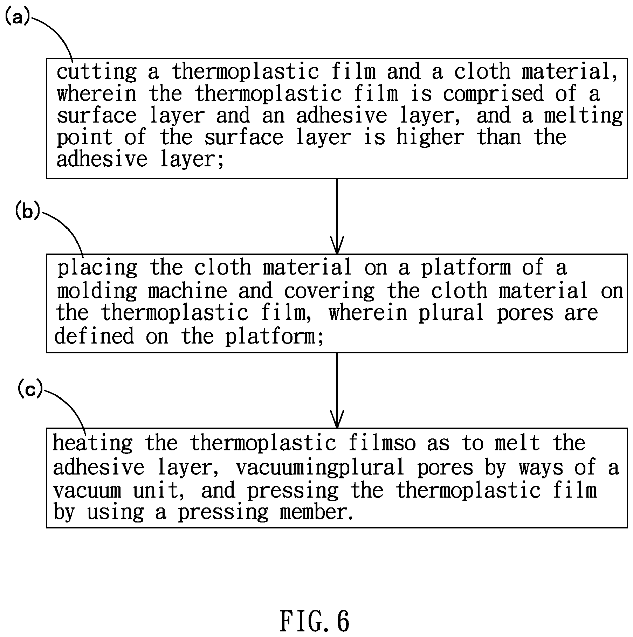

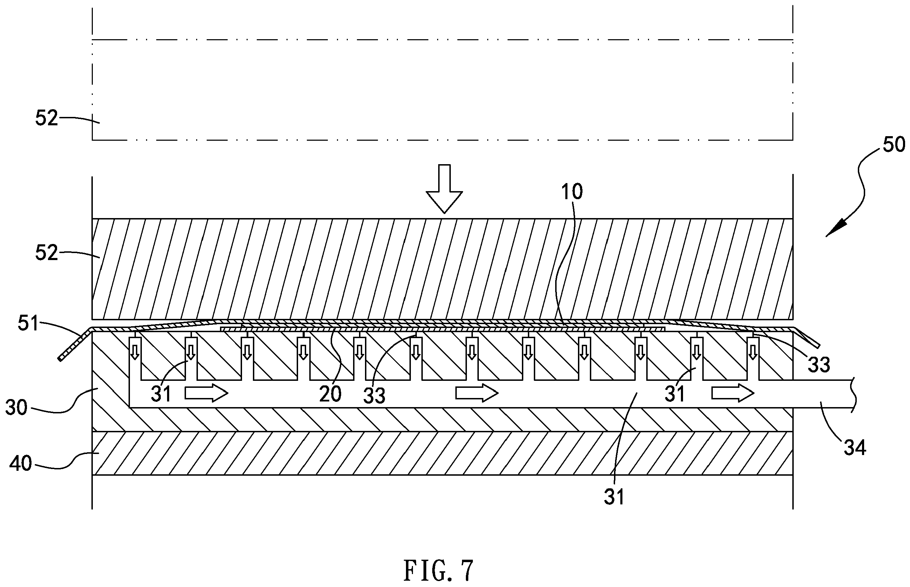

Referring to FIGS. 6 and 7, a method for forming thermoplastic composites according to a second embodiment of the present invention contains steps of:
(a). cutting a thermoplastic film 10 and a cloth material 20;
(b). placing the cloth material 20 on a platform 30 of a molding machine, and then putting an adhesive layer 12 of the thermoplastic film 10 on the cloth material 20, wherein the platform 30 includes a plurality of channels 31 defined therein and plural pores 33 evenly formed on the top surface thereof and communicating with the plurality of channels 31;
(c). heating the thermoplastic film 10 by using a heating unit 40 so as to melt the adhesive layer 12, wherein air in the plurality of channels 34 is drawn by a vacuum unit 34, and a top surface of the thermoplastic film 10 is pressed by a pressing member 50.

Thereby, when the vacuum unit 34 operates, a pressure between the top surface of the platform 30 and the gas insulation film 51 is lower than atmospheric pressure and is a negative pressure to draw the gas insulation film 51 downwardly so that the gas insulation film 51 presses the thermoplastic film 10, and the press mold 52 presses the gas insulation film 51, the plural pores 33 draw the thermoplastic film 10 and the cloth material 20 downwardly, such that the adhesive layer 12 of the thermoplastic film 10 penetrates into the cloth material 20, hence the adhesive layer 12 adheres with the cloth material 20. In addition, the cloth material 20 and the thermoplastic film 10 are combined tighter to form the thermoplastic composites with a varying shape so as to produce shoes, purses, and hats further.

It is to be noted that the pressing member 50 is comprises of the air insulation film 51 or the press mold 52. For example, when gaps of the cloth material 20 are large, the pressing member 50 is the air insulation film 51, and the heating unit 40 is fixed in the platform 30 or the press mold 52.

Preferably, a method for forming thermoplastic composites of the present invention involving a press mold and/or an air insulation film as a pressing member. The technical effect is a better adhesion and a better penetration of the thermoplastic film material into the cloth material provided by a force uniformly applied thereto by the pressing member.

## Claims

1. A method for forming thermoplastic composites comprising:
(a). cutting a thermoplastic film (10) and a cloth material (20), wherein the thermoplastic film (10) is comprised of a surface layer (11) and an adhesive layer (12), and a melting point of the surface layer (11) is higher than the adhesive layer (12);
(b). placing the thermoplastic film (10) on a platform (30) of a molding machine, facing the adhesive layer (12) upwardly, and covering the cloth material (20) on the thermoplastic film (10), wherein the platform (30) includes a plurality of channels (31) defined therein, a plurality of concave and convex patterns (32) arranged on a top surface thereof, and plural pores (33) evenly formed on the top surface thereof and communicating with the plurality of channels (31);
(c). heating the thermoplastic film (10) by using a heating unit (40) so as to melt the adhesive layer (12) and to soften the surface layer (11), wherein air in the plurality of channels (31) is drawn by a vacuum unit (34), and a top surface of the cloth layer (20) is pressed by a pressing member (50), the plural pores (33) draws the thermoplastic film (10) and the cloth material (20) downwardly, and the pressing member (50) presses the cloth material (20), such that the adhesive layer (12) of the thermoplastic film (10) penetrates into the cloth material (20), the adhesive layer (12) adheres with the cloth material (20), the surface layer (11) of the thermoplastic film (10) corresponds to the plurality of concave and convex patterns (32) of the platform (30), thus forming three-dimensional patterns.

2. A method for forming thermoplastic composites comprising steps of:
(a). cutting a thermoplastic film (10) and a cloth material (20), wherein the thermoplastic film (10) is comprised of a surface layer (11) and an adhesive layer (12), and a melting point of the surface layer (11) is higher than the adhesive layer (12);
(b). placing the cloth material (20) on a platform (30) of a molding machine, and then putting an adhesive layer (12) of the thermoplastic film (10) on the cloth material (20), wherein the platform (30) includes a plurality of channels (31) defined therein, and plural pores (33) evenly formed on the top surface thereof and communicating with the plurality of channels (31);
(c). heating the thermoplastic film (10) by using a heating unit (40) so as to melt the adhesive layer (12), wherein air in the plurality of channels (31) is drawn by a vacuum unit (34), and a top surface of the thermoplastic film (10) is pressed by a pressing member (50), the plural pores (33) draw the thermoplastic film (10) and the cloth material (20) downwardly, and the pressing member (50) presses the thermoplastic film (10), such that the adhesive layer (12) of the thermoplastic film (10) penetrates into the cloth material (20),
wherein the pressing member (50) is a press mold and/or an insulation film (51), and wherein a melting point of the air insulation film (51) is higher than that of the surface layer (11) and is covered on the platform (30).

3. The method for forming thermoplastic composites as claimed in claim 1 or 2, wherein the pressing member (50) is a press mold.

4. The method for forming thermoplastic composites as claimed in claim 2 or 3, wherein the pressing member (50) includes an air insulation film (51) and a press mold, and a melting point of the air insulation film (51) is higher than that of the surface layer (11) and is covered on the platform (30), the press mold presses on the air insulation film (51).

5. The method for forming thermoplastic composites as claimed in claim 2 to 4, wherein the heating unit (40) is a press mold.

6. The method for forming thermoplastic composites as claimed in claim 2 to 4, wherein the heating unit (40) is a platform.

7. The method for forming thermoplastic composites as claimed in claim 1, 2 or 4, wherein the thermoplastic film (10) is made of thermoplastic polymeric material and colorant by ways of an extruder.

8. The method for forming thermoplastic composites as claimed in claim 1, 2 or 4, wherein the thermoplastic polymeric material is selected from TPU + SBR, TPU + SEBS, TPU + TPR, TPU + EPDM, TPU + TPU hot melt adhesives and TPU + Nylon elastomer.

9. The method for forming thermoplastic composites as claimed in claim 1, 2 or 4, wherein a color is printed, coated or surface sandwiched on the thermoplastic film (10).

## Patentansprüche

1. Verfahren zur Herstellung thermoplastischer Verbundwerkstoffe, das folgendes umfasst:
(a). Schneiden einer thermoplastischen Folie (10) und eines Stoffmaterials (20), wobei die thermoplastische Folie (10) von einer Oberflächenschicht (11) und einer Klebschicht (12) eingeschlossen ist, und wobei ein Schmelzpunkt der Oberflächenschicht (11) höher als die Klebschicht (12) ist;
(b). Platzieren der thermoplastischen Folie (10) auf einer Plattform (30) einer Formmaschine, so dass sie der Klebschicht (12) nach oben hin gegenüberliegt, und Decken des Stoffmaterials (20) auf der thermoplastischen Folie (10), wobei die Plattform (30) eine Vielzahl von Kanälen (31) darin umfasst, eine Vielzahl von konkaven und konvexen Mustern (32) auf einer Oberfläche davon sowie eine Vielzahl von Poren (33), die gleichmäßig auf deren Oberfläche gebildet sind und in Verbindung mit der Vielzahl von Kanälen (31) stehen;
(c). Erwärmung der thermoplastischen Folie (10) unter Verwendung einer Heizeinheit (40), so dass die Klebschicht (12) schmilzt und die Oberflächenschicht (11) aufweicht, wobei Luft in der Vielzahl von Kanälen (31) von einer Vakuumeinheit (34) angezogen wird, und eine Oberfläche der Stoffschicht (20) wird von einem Presselement (50) gedrückt, wobei die Vielzahl von Poren (33) die thermoplastische Folie (10) und das Stoffmaterial (20) nach unten ziehen, und das Presselement (50) drückt das Stoffmaterial (20), so dass die Klebschicht (12) der thermoplastischen Folie (10) in das Stoffmaterial (20) dringt, wobei die Klebschicht (12) an das Stoffmaterial (20) anliegt, wobei die Oberflächenschicht (11) der thermoplastischen Folie (10) der Vielzahl von konkaven und konvexen Mustern (32) der Plattform (30) entspricht und somit dreidimensionale Muster bildet.

2. Verfahren zur Herstellung thermoplastischer Verbundwerkstoffe mit folgenden Phasen:
(a). Schneiden einer thermoplastischen Folie (10) und eines Stoffmaterials (20), wobei die thermoplastische Folie (10) von einer Oberflächenschicht (11) und einer Klebschicht (12) eingeschlossen ist, und wobei ein Schmelzpunkt der Oberflächenschicht (11) höher als die Klebschicht (12) ist;
(b). Platzieren des Stoffmaterial (20) auf einer Plattform (30) einer Formmaschine, und dann Anbringen einer Klebschicht (12) der thermoplastischen Folie (10) auf das Stoffmaterial (20), wobei die Plattform (30) eine Vielzahl von Kanälen (31) darin umfasst, und die Vielzahl von Poren (33) gleichmäßig auf deren Oberfläche gebildet ist und in Verbindung mit der Vielzahl von Kanälen (31) steht;
(c). Erwärmung der thermoplastischen Folie (10) unter Verwendung einer Heizeinheit (40), so dass die Klebschicht (12) schmilzt, wobei Luft in der Vielzahl von Kanälen (31) von einer Vakuumeinheit (34) angezogen wird und eine Oberfläche der thermoplastischen Folie (10) von einem Presselement (50) gepresst wird, wobei die Vielzahl von Poren (33) die thermoplastische Folie (10) und das Stoffmaterial (20) nach unten zieht, und das Presselement (50) presst die thermoplastische Folie (10), so dass die Klebschicht (12) der thermoplastischen Folie (10) in das Stoffmaterial (20) dringt,
wobei das Presselement (50) eine Pressform und/oder eine Isolierfolie (51) ist, und wobei ein Schmelzpunkt der Luftisolierfolie (51) höher ist als der der Oberflächenschicht (11) und auf der Plattform (30) abgedeckt ist.

3. Verfahren zur Herstellung thermoplastischer Verbundwerkstoffe nach Anspruch 1 oder 2, wobei das Presselement (50) eine Pressform ist.

4. Verfahren zur Herstellung thermoplastischer Verbundwerkstoffe nach Anspruch 2 oder 3, wobei das Presselement (50) eine Luftisolierfolie (51) und eine Pressform umfasst und ein Schmelzpunkt der Luftisolierfolie (51) höher ist als der der Oberflächenschicht (11) und auf der Plattform (30) abgedeckt wird, wobei die Pressform auf die Luftisolierfolie (51) presst.

5. Verfahren zur Herstellung thermoplastischer Verbundwerkstoffe nach Anspruch 2 bis 4, wobei die Heizeinheit (40) eine Pressform ist.

6. Verfahren zur Herstellung thermoplastischer Verbundwerkstoffe nach Anspruch 2 bis 4, wobei die Heizeinheit (40) eine Plattform ist.

7. Verfahren zur Herstellung thermoplastischer Verbundwerkstoffe nach Anspruch 1, 2 oder 4, wobei die thermoplastische Folie (10) aus thermoplastischem Polymermaterial und Farbstoff gemacht ist, mittels einer Strangpresse.

8. Verfahren zur Herstellung thermoplastischer Verbundwerkstoffe nach Anspruch 1, 2 oder 4, wobei das thermoplastische Polymermaterial aus TPU + SBR, TPU + SEBS, TPU + TPR, TPU + EPDM, TPU + TPU-Schmelzklebern und TPU + Nylon-Elastomer ausgewählt wird.

9. Verfahren zur Herstellung thermoplastischer Verbundwerkstoffe nach Anspruch 1, 2 oder 4, wobei eine Farbe auf die thermoplastische Folie (10) gedruckt, als Überzug aufgebracht oder schichtartig eingelegt wird.

## Revendications

1. Procédé pour former des composites thermoplastiques comprenant :
(a). découper un film thermoplastique (10) et un matériau de tissu (20), le film thermoplastique (10) est constitué d'une couche de surface (11) et d'une couche adhésive (12), et un point de fusion de la couche de surface (11) étant supérieur à la couche adhésive (12) ;
(b) placer le film thermoplastique (10) sur une plate-forme (30) d'une machine de moulage, en tournant la couche adhésive (12) vers le haut, et recouvrir le matériau de tissu (20) sur le film thermoplastique (10), la plate-forme (30) comprenant une pluralité de canaux (31) définis à l'intérieur de celle-ci, une pluralité de motifs concaves et convexes (32) prévus sur une surface supérieure de celle-ci, et plusieurs orifices (3) formés de façon régulière sur la surface supérieure de celle-ci et communiquant avec la pluralité de canaux (31) ;
(c). chauffer le film thermoplastique (10) à l'aide d'une unité de chauffage (40) de façon à faire fondre la couche adhésive (12) et à ramollir la couche de surface (11), de l'air dans la pluralité de canaux (31) étant aspiré par une unité à vide (34), et une surface supérieure de la couche de tissu (20) étanr pressée par un élément de pressage (50), les différents orifices (33) tirant le film thermoplastique (10) et le matériau de tissu (20) vers le bas, et l'élément de pressage (50) pressant le matériau de tissu (20), de telle sorte que la couche adhésive (12) du film thermoplastique (10) pénètre dans le matériau de tissu (20), la couche adhésive (12) adhère au matériau de tissu (20), la couche de surface (11) du film thermoplastique (10) se conforme à la pluralité de motifs concaves et convexes (32) de la plate-forme (30), formant ainsi des motifs tridimensionnels.

2. Procédé pour former des composites thermoplastiques comprenant les étapes suivantes :
(a). découper un film thermoplastique (10) et un matériau de tissu (20), le film thermoplastique (10) étant constitué d'une couche de surface (11) et d'une couche adhésive (12), et un point de fusion de la couche de surface (11) étant supérieur à la couche adhésive (12) ;
(b). placer le matériau de tissu (20) sur une plate-forme (30) d'une machine de moulage, puis déposer une couche adhésive (12) du film thermoplastique (10) sur le matériau de tissu (20), la plate-forme (30) comprenant une pluralité de canaux (31) définis à l'intérieur de celle-ci, et plusieurs orifices (33) formés de façon régulière sur la surface supérieure de celle-ci et communiquant avec la pluralité de canaux (31) ;
(c). chauffer le film thermoplastique (10) à l'aide d'une unité de chauffage (40) de façon à faire fondre la couche adhésive (12), de l'air dans la pluralité de canaux (31) étant aspiré par une unité à vide (34), et une surface supérieure du film thermoplastique (10) étant pressée par un élément de pressage (50), les différents orifices (33) tirant le film thermoplastique (10) et le matériau de tissu (20) vers le bas, et l'élément de pressage (50) pressant le film thermoplastique (10), de telle sorte que la couche adhésive (12) du film thermoplastique (10) pénètre dans le matériau de tissu (20),
l'élément de pressage (50) étant une matrice de presse et/ou un film d'isolation (51), et un point de fusion du film d'isolation d'air (51) étant supérieur à celui de la couche de surface (11) et étant recouvert sur la plate-forme (30).

3. Procédé pour former des composites thermoplastiques selon la revendication 1 ou 2, dans lequel l'élément de pressage (50) est une matrice de presse.

4. Procédé pour former des composites thermoplastiques selon la revendication 2 ou 3, dans lequel l'élément de pressage (50) comprend un film d'isolation d'air (51) et une matrice de presse, et un point de fusion du film d'isolation d'air (51) est supérieur à celui de la couche de surface (11) et est recouvert sur la plate-forme (30), la matrice de presse pressant sur le film d'isolation d'air (51).

5. Procédé pour former des composites thermoplastiques selon les revendications 2 à 4, dans lequel l'unité de chauffage (40) est une matrice de presse.

6. Procédé pour former des composites thermoplastiques selon les revendications 2 à 4, dans lequel l'unité de chauffage (40) est une plate-forme.

7. Procédé pour former des composites thermoplastiques selon la revendication 1, 2 ou 4, dans lequel le film thermoplastique (10) est constitué de matériau polymère thermoplastique et de colorant au moyen d'une extrudeuse.

8. Procédé pour former des composites thermoplastiques selon la revendication 1, 2 ou 4, dans lequel le matériau polymère thermoplastique est choisi parmi des adhésives thermofusibles TPU + SBR, TPU + SEBS, TPU + TPR, TPU + EPDM, TPU + TPU et TPU + élastomère Nylon.

9. Procédé pour former des composites thermoplastiques selon la revendication 1, 2 ou 4, dans lequel une couleur est imprimée, revêtue ou prise en sandwich sur le film thermoplastique (10).
